# EUROPÄISCHE PATENTSCHRIFT

(11) **EP 3 387 799 B1**
(45) Veröffentlichungstag und Bekanntmachung des Hinweises auf die Patenterteilung: **15.04.2020**
(21) Anmeldenummer: 16815753.5
(22) Anmeldetag: 06.12.2016
(51) Int. Cl.: H04L 12/403, H04L 29/12, H04L 12/40, G06F 13/40

(54) **BUSANORDNUNG UND VERFAHREN ZUM BETREIBEN EINER BUSANORDNUNG**
BUS ASSEMBLY AND METHOD FOR OPERATING A BUS ASSEMBLY
SYSTÈME DE BUS ET PROCÉDÉ POUR FAIRE FONCTIONNER UN SYSTÈME DE BUS

(30) Priorität: 07.12.2015 DE 102015121288
(43) Veröffentlichungstag der Anmeldung: 17.10.2018
(73) Patentinhaber: Eaton Intelligent Power Limited, Dublin 4 (IE)
(72) Erfinder: HANSING, Matthias, 53604 Bad Honnef (DE); HELLER, Franz, 53757 Sankt Augustin (DE); THIESSMEIER, Peter, 53343 Wachtberg (DE)
(74) Vertreter: Eaton IP Group EMEA
(86) Internationale Anmeldenummer: PCT/EP2016/079820
(87) Internationale Veröffentlichungsnummer: WO 2017/097730

(56) Entgegenhaltungen:
- WO-A1-2005/050924
- WO-A1-2012/041753
- DE-A1- 10 240 832

## Beschreibung

Die vorliegende Erfindung betrifft eine Busanordnung und ein Verfahren zum Betreiben einer Busanordnung.

Eine Busanordnung kann beispielsweise in der Automatisierungstechnik eingesetzt werden. Eine Busanordnung weist typisch einen Koordinator und mehrere Teilnehmer auf. Die Teilnehmer können als Aktoren oder Sensoren realisiert sein. Die Aktoren können Schaltgeräte wie Schütze, Motorstarter und Leistungsschalter, Befehlsgeräte und Frequenzumrichter sein.

Dokument DE 10240832 A1 beschreibt einen Bus mit einer Zentrale, auch Master genannt, einem ersten Melder und einem zweiten Melder. Die Melder werden auch Slaves genannt. Die Zentrale liest von den Meldern die Seriennummern aus, um bei einem Absturz des Bussystems oder einer Unterbrechung des Bussystems über die Seriennummern die Adressierung bei einem Neustart schnell durchführen zu können. Dafür speichert die Zentrale diese Seriennummer in einem Speicher in ihrem Gehäuse ab. Die Zentrale ist über eine Leitung mit dem ersten Melder verbunden. Eine weitere Leitung verbindet den ersten Melder und den zweiten Melder.

Dokument WO 2012/041753 A1 befasst sich mit einem Verfahren zur automatischen Adressvergabe an gleichartige Busteilnehmer. Ein Bussystem umfasst einen Master-Busteilnehmer und mindestens einen Slave-Busteilnehmer. Der Master-Busteilnehmer weist den Slave-Busteilnehmern Adressen zu. Dabei trägt der Master-Busteilnehmer eine Seriennummer zusammen mit der zugewiesenen Adresse in eine Liste ein, die er in seinem Speicher verwaltet. Der Master-Busteilnehmer ist mit den Slave-Busteilnehmern über einen Bus, der etwa als CAN-Bus realisiert ist, verbunden.

In Dokument WO 2005/050924 A1 ist ein Verfahren zur seriellen Vergabe von Adressen und zur Überprüfung der Adressvergabe in einem Bussystem angegeben.

Eine Aufgabe der vorliegenden Erfindung ist es, eine Busanordnung und ein Verfahren zum Betreiben einer Busanordnung bereitzustellen, bei denen für die Adressierung geeignete Informationen im Koordinator gespeichert werden.

Die Aufgabe wird mit den Gegenständen der unabhängigen Patentansprüche gelöst. Weiterbildungen und Ausgestaltungen sind jeweils Gegenstand der abhängigen Ansprüche.

Demnach umfasst eine Busanordnung einen Koordinator, einen ersten und einen zweiten Teilnehmer sowie einen Bus. Der Koordinator weist einen nicht-flüchtigen Speicher auf. Der erste Teilnehmer weist eine erste Seriennummer und der zweite Teilnehmer eine zweite Seriennummer auf. Der Bus umfasst eine erste Signalleitung, die den ersten Teilnehmer und den Koordinator koppelt. Weiter umfasst der Bus eine zweite Signalleitung, die den zweiten Teilnehmer an den ersten Teilnehmer anschließt. Darüber hinaus umfasst der Bus mindestens eine Busleitung, die den Koordinator an den ersten und den zweiten Teilnehmer anschließt. Dabei ist der Koordinator ausgelegt, in einer Konfigurationsphase eine Verbindung zum ersten Teilnehmer aufzunehmen, die erste Seriennummer abzufragen und die erste Seriennummer im nicht-flüchtigen Speicher zu speichern. Weiter ist der Koordinator ausgelegt, eine Verbindung zum zweiten Teilnehmer aufzunehmen, die zweite Seriennummer abzufragen und die zweite Seriennummer im nicht-flüchtigen Speicher zu speichern.
Mit Vorteil weisen der erste und der zweite Teilnehmer einzigartige Seriennummern auf. Da sich der erste Teilnehmer vom zweiten Teilnehmer anhand der jeweiligen Seriennummer unterscheidet, ist eine Adressierung der Teilnehmer über die Seriennummer möglich. Die erste Seriennummer ist eine global einzigartige Nummer, die während des Produktionsprozesses des ersten Teilnehmers im ersten Teilnehmer gespeichert wird. Entsprechend ist auch die zweite Seriennummer eine einzigartige Nummer, die während des Produktionsprozesses des zweiten Teilnehmers im zweiten Teilnehmer gespeichert wird.
In einer Ausführungsform weist der erste Teilnehmer einen ersten nicht-flüchtigen Speicher auf, in dem die erste Seriennummer gespeichert ist. Entsprechend weist der zweite Teilnehmer einen zweiten nicht-flüchtigen Speicher auf, in dem die zweite Seriennummer gespeichert ist. Der erste und der zweite nicht-flüchtige Speicher können beispielsweise permanente Speicher wie etwa ein Read Only Memory, abgekürzt ROM, ein Programmable Read Only Memory, abgekürzt PROM, oder ein One Time Programmable Baustein, kurz OTP Baustein, sein.

In einer Ausführungsform speichert der nicht-flüchtige Speicher des Koordinators die erste und die zweite Seriennummer remanent. Somit speichert der nicht-flüchtige Speicher des Koordinators auch bei einer Unterbrechung einer Stromversorgung des Koordinators die erste und die zweite Seriennummer weiter. Der nicht-flüchtige Speicher kann ein semipermanenter Speicher wie etwa ein Electrically Erasable Programmable Read Only Memory, abgekürzt EEPROM, oder ein Flash-EEPROM sein.

Desweiteren schließt die erste Signalleitung den ersten Teilnehmer an den Koordinator an. Der erste Teilnehmer und der Koordinator sind somit direkt und permanent über die erste Signalleitung aneinander angeschlossen.

Ferner ist der zweite Teilnehmer direkt und permanent über die zweite Signalleitung an den ersten Teilnehmer angeschlossen. Der zweite Teilnehmer ist nicht direkt an die erste Signalleitung angeschlossen. Der zweite Teilnehmer ist ausschließlich über den ersten Teilnehmer mit der ersten Signalleitung gekoppelt. Entsprechend ist der Koordinator nicht direkt an die zweite Signalleitung angeschlossen. Der Koordinator ist über den ersten Teilnehmer mit der zweiten Signalleitung gekoppelt.

An die mindestens eine Busleitung ist sowohl der Koordinator wie auch der erste Teilnehmer als auch der zweite Teilnehmer direkt angeschlossen.

In einer Ausführungsform ist die mindestens eine Busleitung des Busses als genau eine Busleitung realisiert.

In einer alternativen Ausführungsform weist der Bus die mindestens eine Busleitung sowie eine weitere Busleitung auf. Somit weist der Bus genau zwei Busleitungen, nämlich eine erste und eine zweite Busleitung, auf. Die erste und die zweite Busleitung können gemäß dem Schnittstellen-Standard TIA/EIA-485 A, auch EIA-485 oder RS-485 bezeichnet, betrieben werden.

In einer Ausführungsform umfasst die Busanordnung einen oder mehrere weitere Teilnehmer, die an die mindestens eine Busleitung angeschlossen sind. Ein weiterer Teilnehmer kann über eine dritte Signalleitung an den zweiten Teilnehmer angeschlossen sein. Der oder die weiteren Teilnehmer können jedoch auch beispielsweise zwischen dem Koordinator und dem ersten Teilnehmer angeordnet sein.

In einer Ausführungsform ist mindestens einer der Teilnehmer als Aktor, Messgerät oder Sensor realisiert. Der Aktor kann ein Schaltgerät - wie ein Schütz, ein Motorstarter oder ein Leistungsschalter - , ein Stellgerät, ein Befehlsgerät, ein Meldegerät, ein Bediengerät oder ein Frequenzumrichter sein.

In einer Ausführungsform vergleicht der Koordinator die im nicht-flüchtigen Speicher gespeicherte erste Seriennummer mit der im nicht-flüchtigen Speicher gespeicherten zweiten Seriennummer. Der Koordinator stellt ein Signal in Abhängigkeit des Vergleichsergebnisses bereit. Das Signal repräsentiert somit die Information, ob die zwei Seriennummern identisch sind. Bei identischen Seriennummern liegt ein Fehlerfall vor. Im Fall, dass die Busanordnung den ersten und den zweiten Teilnehmer sowie einen weiteren Teilnehmer mit einer weiteren Seriennummer oder mehrere weitere Teilnehmer mit mehreren weiteren Seriennummer umfasst, vergleicht der Koordinator die erste und die zweite Seriennummer sowie die weitere oder die weiteren Seriennummern miteinander. Der Koordinator stellt das Signal bereit, das die Information repräsentiert, dass mindestens zwei Seriennummern identisch sind.

In einer Ausführungsform ist die Konfigurationsphase Teil einer Betriebsphase. Auf die Betriebsphase folgen eine Ausschaltphase und dann eine weitere Betriebsphase, welche mit einer Wiederanlaufphase beginnt. Im weiteren Verlauf können sich weitere Betriebsphasen, die jeweils zu Anfang eine Wiederanlaufphase aufweisen, und Ausschaltphasen abwechseln. Somit folgt die Wiederanlaufphase der Konfigurationsphase.

In einer Ausführungsform nimmt in der Wiederanlaufphase der Koordinator eine Verbindung zum ersten und zum zweiten Teilnehmer auf, fragt die erste und die zweite Seriennummer ab und vergleicht die abgefragte erste und zweite Seriennummer mit der im nicht-flüchtigen Speicher gespeicherten ersten und zweiten Seriennummer. Mit Vorteil kann somit der Koordinator feststellen, ob beispielsweise in der Ausschaltphase vor der Wiederanlaufphase ein Teilnehmer ausgetauscht wurde.

In einer Ausführungsform gibt der Koordinator ein Signal mit der Information ab, wenn durch den Vergleich in der Wiederanlaufphase ermittelt wird, dass die abgefragte erste Seriennummer von der im nicht-flüchtigen Speicher gespeicherten ersten Seriennummer und/oder die abgefragte zweite Seriennummer von der im nicht-flüchtigen Speicher gespeicherten zweiten Seriennummer abweicht. Mit diesem Signal kann somit der Koordinator den Betreiber der Busanordnung oder eine der Busanordnung übergeordnete Steuerung informieren, dass einer der Teilnehmer ausgetauscht worden ist.

In einer Ausführungsform kann der Koordinator in einen Austauschmodus oder eine Austauschbetriebsart versetzt werden. Befindet sich der Koordinator im Austauschmodus oder in der Austauschbetriebsart, so nimmt der Koordinator in der Wiederanlaufphase eine Verbindung zum ersten und zum zweiten Teilnehmer auf, fragt die erste und die zweite Seriennummer ab und speichert die abgefragte erste und zweite Seriennummer im nicht-flüchtigen Speicher anstelle der bisher im nicht-flüchtigen Speicher gespeicherten ersten und zweiten Seriennummer. Optional gibt auch hier der Koordinator das Signal mit der Information ab, dass beim Vergleich die abgefragte erste Seriennummer von der bisher im nicht-flüchtigen Speicher gespeicherten ersten Seriennummer oder/und die abgefragte zweite Seriennummer von der bisher im nicht-flüchtigen Speicher gespeicherten zweiten Seriennummer abweichen.

In einer Ausführungsform umfasst der erste Teilnehmer einen ersten flüchtigen Speicher. Der zweite Teilnehmer kann einen zweiten flüchtigen Speicher umfassen. Der erste und der zweite flüchtige Speicher können beispielsweise als Random Access Memory, abgekürzt RAM, oder Flash-Speicher implementiert sein. Das RAM kann etwa als Dynamic Random Access Memory, abgekürzt DRAM, oder Static Random Access Memory, abgekürzt SRAM, realisiert sein. Der erste und der zweite flüchtige Speicher verlieren in der Ausschaltphase ihren Speicherinhalt.

In einer Ausführungsform aktiviert der Koordinator in der Konfigurationsphase über die erste Signalleitung den ersten Teilnehmer und sendet über die mindestens eine Busleitung ein Telegramm, das eine erste Teilnehmeradresse enthält, an alle Teilnehmer und somit auch an den ersten und den zweiten Teilnehmer. Der erste Teilnehmer speichert die erste Teilnehmeradresse im ersten flüchtigen Speicher. Dadurch, dass genau ein Teilnehmer aktiviert ist, nämlich in diesem Falle der erste Teilnehmer, speichert ausschließlich dieser Teilnehmer die über die mindestens eine Busleitung bereitgestellte Teilnehmeradresse. Ein derartiges über die Busleitung an alle Teilnehmer abgesandtes Telegramm kann auch als Broadcast-Nachricht bezeichnet werden. Da der erste Teilnehmer die erste Teilnehmeradresse nunmehr in der Betriebsphase, die von der Konfigurationsphase eingeleitet wurde, weiter im ersten flüchtigen Speicher speichert, kann er mittels der ersten Teilnehmeradresse adressiert werden. Die Aktivierung des ersten Teilnehmers kann direkt vom Koordinator erfolgen oder, falls weitere Teilnehmer zwischen dem Koordinator und dem ersten Teilnehmer angeordnet sind, über den dem ersten Teilnehmer vorangehenden Teilnehmer.

In einer Ausführungsform aktiviert der erste Teilnehmer in der Konfigurationsphase über die zweite Signalleitung den zweiten Teilnehmer. Der Koordinator sendet über die mindestens eine Busleitung ein Telegramm, das eine zweite Teilnehmeradresse enthält, an alle Teilnehmer und damit an den ersten und den zweiten Teilnehmer. Der zweite Teilnehmer speichert die zweite Teilnehmeradresse im zweiten flüchtigen Speicher. Da im Zeitraum, in dem das Telegramm mit der zweiten Teilnehmeradresse gesendet wird, nur der zweite Teilnehmer aktiviert ist, übernimmt ausschließlich der zweite Teilnehmer die zweite Teilnehmeradresse in seinen flüchtigen Speicher.

Die Aktivierung des zweiten Teilnehmers durch den ersten Teilnehmer erfolgt erst dann, wenn zuvor der erste Teilnehmer aktiviert wurde und der erste Teilnehmer die erste Teilnehmeradresse im ersten flüchtigen Speicher gespeichert hat.

In einer Ausführungsform bilden der Koordinator und die Teilnehmer eine Reihenschaltung oder Kette, die als Daisy-Chain bezeichnet werden kann. Somit bilden der Koordinator und die Teilnehmer eine Daisy-Chain-Anordnung oder einen Daisy-Chain-Bus. Der Koordinator und die Teilnehmer sind seriell über die Signalleitungen verbunden. Der erste Teilnehmer kann direkt an den Koordinator angeschlossen sein. Die weiteren Teilnehmer sind jeweils an ihre Vorgänger angeschlossen.

In einer Ausführungsform umfasst der erste Teilnehmer einen Transceiver, welcher mit dem ersten flüchtigen Speicher und dem ersten nicht-flüchtigen Speicher gekoppelt ist. Ebenso kann der zweite Teilnehmer einen mit dem zweiten flüchtigen Speicher und dem zweiten nicht-flüchtigen Speicher gekoppelten Transceiver umfassen. Die Transceiver können als Bus-Transceiver realisiert sein. Die Transceiver können für den Schnittstellen-Standard TIA/EIA-485 A, auch EIA-485 oder RS-485 bezeichnet, ausgelegt sein.

In einer Ausführungsform sendet der Koordinator in einer Betriebsphase, etwa nach der Konfigurationsphase oder nach der Wiederanlaufphase, über die mindestens eine Busleitung ein Telegramm, das wahlweise die erste Teilnehmeradresse oder die erste Seriennummer sowie Daten enthält, an alle Teilnehmer und somit auch an den ersten und den zweiten Teilnehmer. Der Transceiver des ersten Teilnehmers erkennt die erste Teilnehmeradresse und die erste Seriennummer, sodass der erste Teilnehmer die Daten im Telegramm verarbeitet. Der erste Teilnehmer kann somit durch ein Telegramm, das ausschließlich die erste Teilnehmeradresse sowie Daten enthält, angesprochen werden wie auch durch ein Telegramm, das ausschließlich die erste Seriennummer sowie Daten enthält. Der erste Teilnehmer kann somit auf zweierlei Art und Weise über die mindestens eine Busleitung adressiert werden. Zusätzlich kann der erste Teilnehmer auch über die erste Signalleitung aktiviert werden. Auch der zweite und die weiteren Teilnehmer können die zweite Teilnehmeradresse und die zweite Seriennummer beziehungsweise die weiteren Teilnehmeradressen und die weiteren Seriennummern erkennen, sodass der zweite beziehungsweise weitere Teilnehmer die Daten im Telegramm verarbeitet.

In einer Ausführungsform erkennt der Koordinator in der Betriebsphase einen Ausfall eines Teilnehmers, wie des ersten und/oder des zweiten Teilnehmers, und speichert im nicht-flüchtigen Speicher Informationen über den Ausfall des Teilnehmers, wie etwa des ersten und/oder des zweiten Teilnehmers. Der Koordinator registriert die ausgefallenen Teilnehmer als ausgefallen. Der Ausfall eines Teilnehmers kann beispielsweise durch einen Defekt im Teilnehmer oder durch die Wegnahme des Teilnehmers und damit ein Fehlen des Teilnehmers ausgelöst sein. Somit werden im nicht-flüchtigen Speicher des Koordinators zu jeder Teilnehmeradresse sowohl die zugehörige Seriennummer wie auch die Information, ob der Teilnehmer ausgefallen ist oder ob er aktiv ist, gespeichert.

In einer Ausführungsform kann der Koordinator einen ausgefallenen Teilnehmer wieder aktivieren. Die Aktivierung kann dabei in Vorwärtsrichtung wie auch in Rückwärtsrichtung erfolgen.

In einer Ausführungsform ist ausschließlich ein einzelner Teilnehmer ausgefallen. Es sind somit nicht zwei oder mehrere hintereinander am Bus sich befindende Teilnehmer ausgefallen. Ein einzelner Teilnehmer kann in Vorwärtsrichtung aktiviert werden. Dazu sendet der Koordinator ein Telegramm an alle Teilnehmer und somit auch an den ersten und zweiten Teilnehmer mit der Seriennummer desjenigen Teilnehmers, der zwischen dem Koordinator und dem ausgefallenen Teilnehmer und zwar unmittelbar vor dem ausgefallenen Teilnehmer liegt. Das Telegramm enthält einen Befehl zum Abgeben eines Signals an die Signalleitung zur Aktivierung des ausgefallenen Teilnehmers. Der ausgefallene Teilnehmer bestätigt seine Aktivierung über die mindestens eine Busleitung. Anschließend speichert der Koordinator die Information über die Einsatzfähigkeit des nunmehr nicht mehr ausgefallenen Teilnehmers im nicht-flüchtigen Speicher.

In einer Ausführungsform ist beispielsweise der zweite Teilnehmer ausgefallen und der erste Teilnehmer funktionsfähig. Somit sendet der Koordinator über die mindestens eine Busleitung ein Telegramm, das die erste Seriennummer und einen Befehl zum Abgeben eines Signals an die zweite Signalleitung enthält, an alle Teilnehmer und somit auch an den ersten und den zweiten Teilnehmer. Der erste Teilnehmer aktiviert über die zweite Signalleitung den zweiten Teilnehmer und der zweite Teilnehmer bestätigt die Aktivierung gegenüber dem Koordinator. Anschließend speichert der Koordinator die Information über die Einsatzfähigkeit des zweiten Teilnehmers im nicht-flüchtigen Speicher.

In einer Ausführungsform sind zwei oder mehrere hintereinanderliegende Teilnehmer ausgefallen. Derjenige ausgefallene Teilnehmer, der am nächsten zum Koordinator liegt, kann mittels des vorhergehenden Teilnehmers wie oben beschrieben in Vorwärtsrichtung aktiviert werden. Ist jedoch die Aktivierung in Vorwärtsrichtung nicht möglich, weil beispielsweise ein Teilnehmer nicht aktivierbar oder nicht vorhanden ist, so kann auch eine Aktivierung in Rückwärtsrichtung erfolgen.

In einer Ausführungsform sind beispielsweise der erste Teilnehmer sowie ein zwischen dem Koordinator und dem ersten Teilnehmer liegender weiterer Teilnehmer ausgefallen. Der Koordinator kann zu einem späteren Zeitpunkt in der Betriebsphase über die mindestens eine Busleitung ein Telegramm, das die erste Seriennummer und einen Befehl zum Abgeben eines Signals an die zweite Signalleitung enthält, an alle Teilnehmer und damit auch an den ersten und zweiten Teilnehmer absenden. Der erste Teilnehmer, sofern er wieder aktivierbar ist, aktiviert über die zweite Signalleitung den zweiten Teilnehmer, sodass der zweite Teilnehmer die Aktivierung über die mindestens eine Busleitung an den Koordinator bestätigt. Anschließend speichert der Koordinator die Information über die Einsatzfähigkeit des ersten Teilnehmers im nicht-flüchtigen Speicher. Somit ist trotz Lücke zwischen erstem Teilnehmer und Koordinator der erste Teilnehmer mit Hilfe des zweiten Teilnehmers in Rückwärtsrichtung aktivierbar.

In einer Ausführungsform umfasst eine Busanordnung einen Koordinator, einen ersten und einen zweiten Teilnehmer sowie einen Bus. Der Bus umfasst eine erste Signalleitung, die den ersten Teilnehmer und den Koordinator koppelt, und eine zweite Signalleitung. Weiter umfasst der erste Teilnehmer eine schaltbare Stromsenke. Der zweite Teilnehmer umfasst eine Stromquelle und einen Komparator. Die zweite Signalleitung koppelt die schaltbare Stromsenke mit der Stromquelle.

In einer Ausführungsform ist zum Aktivieren des zweiten Teilnehmers der erste Teilnehmer ausgelegt, die schaltbare Stromsenke zwischen einem leitenden und einem nicht-leitenden Zustand umzuschalten. Der zweite Teilnehmer ist ausgelegt, die Änderung einer Eingangsspannung des zweiten Teilnehmers mit dem Komparator zu detektieren. Damit kann die Änderung des durch die zweite Signalleitung fließenden Stroms detektiert werden.

Diese Busanordnung kann mit oder ohne Speicherung der Seriennummern im Koordinator realisiert werden.

In einer Ausführungsform umfasst ein Verfahren zum Betrieb einer Busanordnung in einer Konfigurationsphase folgende Schritte: Der Koordinator nimmt eine Verbindung zu einem ersten Teilnehmer mit einer ersten Seriennummer über einen Bus mit mindestens einer Busleitung auf. Der erste Teilnehmer sendet die erste Seriennummer an den Koordinator über die mindestens eine Busleitung. Der Koordinator speichert die erste Seriennummer in einem nicht-flüchtigen Speicher des Koordinators. Der Koordinator nimmt eine Verbindung zu einem zweiten Teilnehmer mit einer zweiten Seriennummer über den Bus mit mindestens einer Busleitung auf. Der zweite Teilnehmer sendet die zweite Seriennummer an den Koordinator über die mindestens eine Busleitung. Der Koordinator speichert die zweite Seriennummer im nicht-flüchtigen Speicher des Koordinators. Der Bus umfasst zusätzlich eine erste Signalleitung, die den ersten Teilnehmer und den Koordinator koppelt, und eine zweite Signalleitung, die den zweiten Teilnehmer an den ersten Teilnehmer anschließt. Die mindestens eine Busleitung schließt den Koordinator an den ersten und den zweiten Teilnehmer an.

Mit Vorteil ist über die Speicherung der ersten und der zweiten Seriennummer im nicht-flüchtigen Speicher des Koordinators eine Information im Koordinator vorhanden, die eine Adressierung des ersten und des zweiten Teilnehmers mit einer jeweils einzigartigen Nummer ermöglicht.

Die Busanordnung ermöglicht eine kombinierte Adressierung von Teilnehmern. Die Busanordnung kann auch Bussystem bezeichnet werden. Ein Austausch von Bussegmenten im Betrieb aufgrund der kombinierten Adressierung ist ermöglicht. Die Busanordnung weist ein Wiederanlaufverfahren auf. Das Wiederanlaufverfahren ist ohne Neuadressierung möglich.

Die Busanordnung kann ein Adressierungsverfahren über Daisy-Chain und über die eindeutige Seriennummer durchführen, so dass bei einem Wiederanlauf auch ohne Daisy-Chain eine weitere Adressierung der Teilnehmer möglich ist.

Bei jeder ersten Inbetriebnahme der Busanordnung wird ein Verfahren über Daisy-Chain verwendet. Alle Teilnehmer am Bus werden vom Koordinator mit aufsteigender Adressfolge adressiert. In diesem Verfahren wird von jedem Busteilnehmer eine eindeutige Seriennummer abgefragt, die in einer integrierten Schaltung, die unter anderem die Buskommunikation ausübt, abgespeichert ist. Dabei wird in dieser integrierten Schaltung eine global einzigartige Nummer während des Produktionsprozesses eingespeichert. Die integrierte Schaltung kann als applikationsspezifische integrierte Schaltung, abgekürzt ASIC, realisiert sein. Die integrierte Schaltung kann den Transceiver und den nicht-flüchtigen Speicher des Teilnehmers umfassen. Außerdem wird eine Geräte-Identität (Hersteller, Gerät), englisch (Vendor, Device) ausgelesen, die den Typ des Geräts angibt (z.B. Eaton, Schalter, 200 Ampere, Typ-Nummer). Das Adressierungsverfahren endet am ersten fehlenden Teilnehmer bzw. am letztmöglich zu adressierenden Teilnehmer. Die dazugehörige, eindeutige Seriennummer eines jeden adressierten Teilnehmers wird zusammen mit seiner Teilnehmeradresse beim Koordinator remanent gespeichert.

Über dieses Verfahren lassen sich Bussegmente abschalten, wieder einschalten, aber auch in einem dafür vorgesehenen Betriebsmodus austauschen. Dabei steht die Daisy-Chain für die geographische Position und über die gespeicherten Geräte-Identität (Hersteller, Gerät) ist der Geräteersatz möglich. Die neue Seriennummer der ausgetauschten Geräte bzw. Teilnehmer werden dann in der remanenten Konfiguration des Koordinators ausgetauscht.

Beispielsweise wird bei einem Wiederanlauf des Koordinators durchgeführt: Die Busteilnehmer werden ohne Daisy-Chain adressiert.

Über die Daisy-Chain kann dann die zugehörige eindeutige Hardware Seriennummer, die bei der Erstkonfiguration ermittelt wurde, mit der Remanenten verifiziert werden. Damit ist eine Falschadressierung vermieden.

Alle Seriennummern in der Busanordnung werden geprüft, um eine Doppeladressierung zu vermeiden.

Werden ein oder mehrere Teilnehmer nicht erkannt, z.B. durch Unterbrechung der Daisy-Chain (etwa bei fehlendem oder fehlerhaftem Teilnehmer), kann mit der eindeutigen Hardware Seriennummer auch ohne Daisy-Chain die Adressierung fortgesetzt werden. Dies bedeutet, dass jeder Teilnehmer im System eine eindeutige Seriennummer besitzt (diese Seriennummer erhält jeder ASIC in der Herstellung) und sich bei ausgefallener Signalleitung (a la Daisy Chain) genau über diese Seriennummer dann noch ansprechen lassen kann. Dies geschieht in einem Telegramm, welches über das Bussystem übertragen wird, und nur dieser Teilnehmer kann diese Information für sich nutzen und darauf dann auch reagieren. Alles Weitere wird dann vom Koordinator aus geregelt.

Dieses Verfahren wird auch bei Ausfall von Bussegmenten und der Wiederankopplung von Teilnehmern als Option im Betrieb verwendet.

Mittels der zwei kombinierten Adressierungsverfahren können Bussegmente im laufenden Betrieb ausgetauscht werden. Dabei wird die Daisy-Chain verwendet und die Geräte-ID (Hersteller, Gerät) ausgelesen und verglichen. Die neuen Seriennummern der ausgetauschten Teilnehmer werden in der remanenten Konfiguration des Koordinators dann ausgetauscht, wenn ein spezieller Betriebsmode, z.B. ein Austauschmodus, gewählt wurde.

Die Erfindung wird im Folgenden an mehreren Ausführungsbeispielen anhand der Figuren näher erläutert. Funktions- beziehungsweise wirkungsgleiche Komponenten oder Funktionseinheiten tragen gleiche Bezugszeichen. Insoweit sich Komponenten oder Funktionseinheiten in ihrer Funktion entsprechen, wird deren Beschreibung nicht in jeder der folgenden Figuren wiederholt. Es zeigen:
- Figur 1: eine beispielhafte Ausführungsform einer Busanordnung,
- Figuren 2A bis 2H: eine beispielhafte Ausführungsform einer Busanordnung in verschiedenen Phasen,
- Figur 3: eine beispielhafte zeitliche Abfolge von Phasen in einer Busanordnung und
- Figur 4: eine beispielhafte Ausführungsform zweier Teilnehmer einer Busanordnung.

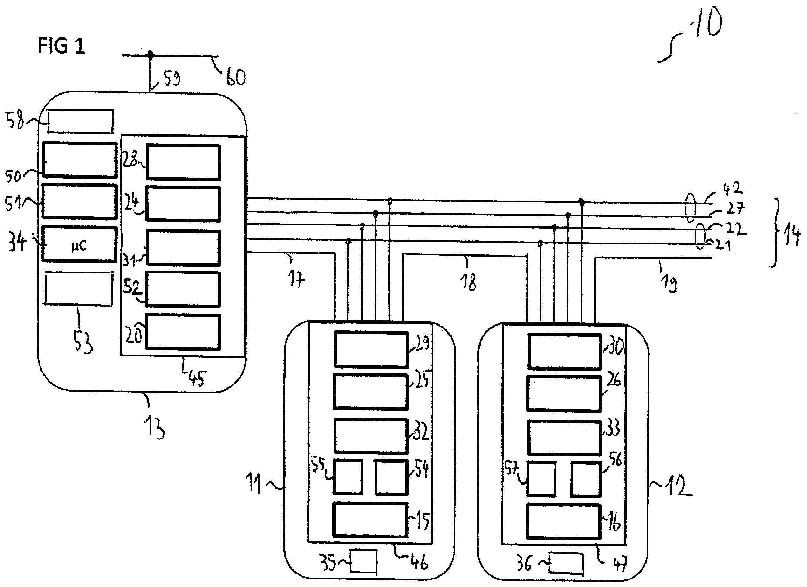

Figur 1 zeigt eine beispielhafte Ausführungsform einer Busanordnung 10, die einen ersten und einen zweiten Teilnehmer 11, 12, einen Koordinator 13 und einen Bus 14 umfasst. Der Koordinator 13 ist mit dem ersten und dem zweiten Teilnehmer 11, 12 über den Bus 14 verbunden. Der erste und der zweite Teilnehmer 11, 12 weisen jeweils einen Prozessorkern 15, 16 auf. Der Bus 14 umfasst eine erste Signalleitung 17, die einen Anschluss des Koordinators 13 mit einem Anschluss des ersten Teilnehmers 11 und damit beispielsweise mit einem Anschluss des Prozessorkerns 15 des ersten Teilnehmers 11 verbindet. Die erste Signalleitung 17 ist nicht direkt an den zweiten oder einen weiteren Teilnehmer 12 angeschlossen. Aus Gründen der Übersichtlichkeit sind die Leitungen im Koordinator 13 und im ersten und zweiten Teilnehmer 11, 12 nicht eingezeichnet.

Weiter umfasst der Bus 14 eine zweite Signalleitung 18, die einen Anschluss des ersten Teilnehmers 11 an einen Anschluss des zweiten Teilnehmers 12 anschließt. Beispielsweise verbindet die zweite Signalleitung 18 den Prozessorkern 15 des ersten Teilnehmers 11 mit dem Prozessorkern 16 des zweiten Teilnehmers 12. Zusätzlich kann der Bus 14 eine dritte Signalleitung 19 umfassen, die einen Anschluss des zweiten Teilnehmers 12 mit einem nicht gezeigten dritten Teilnehmer verbindet. Der Koordinator 13 umfasst einen Prozessorkern 20, der an die erste Signalleitung 17 angeschlossen ist. Der Bus 14 ist als linearer Bus realisiert. Der Bus 14 kann als serieller Bus ausgebildet sein. Der Koordinator 13 kann als Master implementiert sein. Die Teilnehmer 11, 12 können als Slaves realisiert sein. Der Prozessorkern 15, 16, 20 kann als Mikroprozessor implementiert sein.

Der Prozessorkern 20 des Koordinators 13 ist über eine Signalleitungsschaltung 31 des Koordinators 13 an die erste Signalleitung 17 angeschlossen. Weiter ist der Prozessorkern 15 des ersten Teilnehmers 11 über eine Signalleitungsschaltung 32 des ersten Teilnehmers 11 an die erste und die zweite Signalleitung 17, 18 angeschlossen. Der Prozessorkern 16 des zweiten Teilnehmers 12 ist über eine Signalleitungsschaltung 33 des zweiten Teilnehmers 12 an die zweite und falls vorhanden auch an die dritte Signalleitung 18, 19 angeschlossen.

Darüber hinaus umfasst der Bus 14 mindestens eine Busleitung 21, die den Koordinator 13 mit allen Teilnehmern und somit mit dem ersten und dem zweiten Teilnehmer 11, 12 verbindet. Ein Signal auf der mindestens einen Busleitung 21 erreicht alle Teilnehmer 11, 12. Der Bus 14 kann eine weitere Busleitung 22 umfassen, die den Koordinator 13 mit allen Teilnehmern 11, 12 verbindet. Die mindestens eine Busleitung 21 und die weitere Busleitung 22 können auch als erste und zweite Busleitung bezeichnet werden. Der Koordinator 13 umfasst einen Transceiver 24, der den Prozessorkern 20 mit der ersten und der zweiten Busleitung 21, 22 koppelt. Der erste und der zweite Teilnehmer 11, 12 umfassen ebenfalls jeweils einen Transceiver 25, 26 mit zwei Anschlüssen, die an die erste und die zweite Busleitung 21, 22 angeschlossen sind. Im ersten und zweiten Teilnehmer 11, 12 ist der Transceiver 25, 26 jeweils mit dem Prozessorkern 15, 16 gekoppelt. Die erste und die zweite Busleitung 21, 22 sowie die Transceiver 24 - 26 des Koordinators 13 und der Teilnehmer 11, 12 können gemäß TIA/EIA-485 A Standard implementiert sein. Die Transceiver 24 - 26 des Koordinators 13 und der Teilnehmer 11, 12 können als Sende- und Empfangs-Transceiver ausgelegt und für den Halbduplexbetrieb realisiert sein.

Zusätzlich umfasst der Bus 14 eine Versorgungsleitung 27, die eine Spannungsversorgung 28 des Koordinators 13 mit einer Spannungsversorgung 29 des ersten Teilnehmers 11 und einer Spannungsversorgung 30 des zweiten Teilnehmers 12 verbindet. Die Spannungsversorgung 28, 29, 30 kann jeweils als Spannungsregulator realisiert sein.

Weiter kann der erste und der zweite Teilnehmer 11, 12 jeweils eine Applikationseinrichtung 35, 36 aufweisen. Die Applikationseinrichtung 35, 36 kann als Aktor-, Messgeräts- oder Sensor-Einrichtung implementiert sein. Somit können der erste und der zweite Teilnehmer 11, 12 als Aktor, Messgerät und/oder Sensor realisiert sein. Die Applikationseinrichtung 35 des ersten Teilnehmers 11 ist mit dem Prozessorkern 15 des ersten Teilnehmers 11 gekoppelt. Entsprechendes gilt für den zweiten Teilnehmer 12. Ferner umfasst der Bus 14 eine Bezugspotentialleitung 42, die einen Bezugspotentialanschluss des Koordinators 13 mit Bezugspotentialanschlüssen 44 des ersten und des zweiten Teilnehmers 11, 12 verbindet. Die Versorgungsleitung 27 und die Bezugspotentialleitung 42 dienen der Spannungsversorgung der Teilnehmer 11, 12 durch den Koordinator 13.

Darüber hinaus umfasst der Koordinator 13 einen Speicher 53, der mit dem Prozessorkern 20 oder einem Mikrocontroller 34 des Koordinators 13 verbunden ist. Der Speicher 53 kann als nicht-flüchtiger Speicher realisiert sein. Weiter umfasst der Koordinator 13 einen flüchtigen Speicher 52. Der erste Teilnehmer 11 umfasst einen ersten flüchtigen Speicher 54 und einen ersten nicht-flüchtigen Speicher 55, die an den Transceiver 25 angeschlossen sein können. Der zweite Teilnehmer 12 umfasst einen zweiten flüchtigen Speicher 56 und einen zweiten nicht-flüchtigen Speicher 57, die an den Transceiver 26 angeschlossen sein können. Die flüchtigen Speicher 52, 54, 56 können jeweils als Random Access Memory, abgekürzt RAM, oder Flash-Speicher realisiert sein.

Der Koordinator 13 umfasst eine integrierte Schaltung 45, die als ASIC realisiert sein kann. Die integrierte Schaltung 45 kann die Spannungsversorgung 28, den Transceiver 24, die Signalleitungsschaltung 31, den flüchtigen Speicher 52 und den Prozessorkern 20 umfassen. Weiter umfasst der erste und der zweite Teilnehmer 11, 12 jeweils eine integrierte Schaltung 46, 47, die als ASIC realisiert sein kann. Die integrierte Schaltung 46 des ersten Teilnehmers 11 kann die Spannungsversorgung 29, den Transceiver 25, die Signalleitungsschaltung 32, den ersten flüchtigen Speicher 54, den ersten nicht-flüchtigen Speicher 55 und den Prozessorkern 15 umfassen. Entsprechend kann die integrierte Schaltung 47 des zweiten Teilnehmers 12 die Spannungsversorgung 30, den Transceiver 26, die Signalleitungsschaltung 33, den zweiten flüchtigen Speicher 56, den zweiten nicht-flüchtigen Speicher 57 und den Prozessorkern 16 aufweisen.

Der Koordinator 13 umfasst einen weiteren Transceiver 58, der einen weiteren Busanschluss 59 mit dem Mikrocontroller 34 koppelt. Weiter umfasst die Busanordnung 10 einen Feldbus 60, der an den weiteren Busanschluss 59 angeschlossen ist. Der Koordinator 13 kann ein Gateway, Router oder Switch sein. Der Koordinator 13 weist einen Oszillator 50 auf. Der Oszillator 50 kann als RC Oszillator ausgeführt sein. Der Oszillator 50 kann zur Zeitsteuerung eingesetzt werden. Der Koordinator 13 kann einen weiteren Speicher 51, der als RAM oder Flash-Speicher realisiert ist, aufweisen.

Der Bus 14 ist als Flachbandkabel oder Rundkabel realisiert. Gemäß Figur 1 kann der Bus 14 z.B. aus fünf Adern bestehen. Alternativ kann der Bus 14 eine andere Anzahl von Adern, z.B. acht Adern, aufweisen.

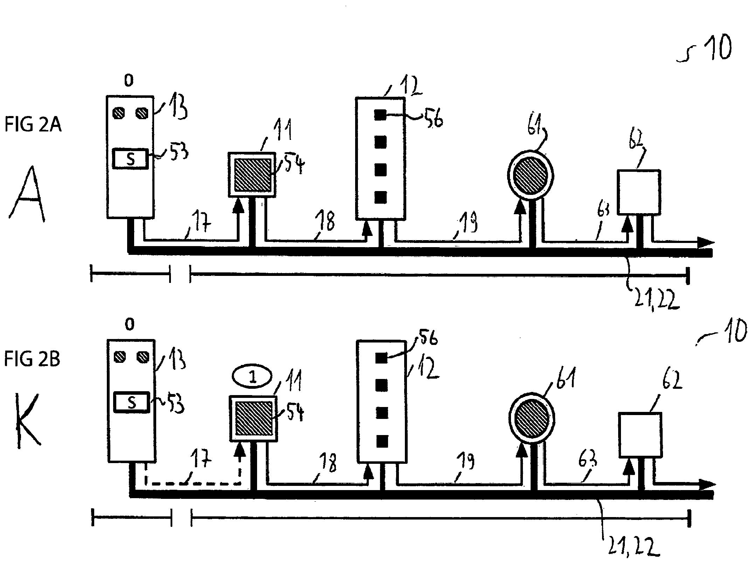

Die Funktionsweise der Busanordnung 10 gemäß Figur 1 wird anhand der Figuren 2A bis 2H näher erläutert.

Figuren 2A bis 2H zeigen eine beispielhafte Ausführungsform einer Busanordnung 10, die eine Weiterbildung der in Figur 1 gezeigten Ausführungsform ist. Die Busanordnung 10 umfasst den Koordinator 13, den ersten und den zweiten Teilnehmer 11, 12 sowie einen dritten und einen vierten Teilnehmer 61, 62. Der Koordinator 13 ist über die erste Signalleitung 17 direkt an den ersten Teilnehmer 11 angeschlossen. Der erste Teilnehmer 11 ist über die zweite Signalleitung 18 direkt an den zweiten Teilnehmer 12 angeschlossen. Entsprechend ist der zweite Teilnehmer 12 über die dritte Signalleitung 19 direkt an den dritten Teilnehmer 61 angeschlossen. Weiter ist der dritte Teilnehmer 61 über eine vierte Signalleitung 63 an den vierten Teilnehmer 62 angeschlossen. Die erste bis zur vierten Signalleitung 17, 18, 19, 63 bilden eine Daisy-Chain. Darüber hinaus ist der Koordinator 13 direkt an alle Teilnehmer 11, 12, 61, 62 über die mindestens eine Busleitung 21 und die weitere Busleitung 22, welche auch als erste und zweite Busleitung bezeichnet werden, angeschlossen.

In Figur 2A ist die Busanordnung 10 in einer Ausschaltphase A dargestellt. Die Ausschaltphase A kann beispielsweise vor einer Betriebsphase B sein, die mit einer Konfigurationsphase K beginnt. Alternativ kann die Ausschaltphase A vor einer weiteren Betriebsphase B' sein, die mit einer Wiederanlaufphase W beginnt. Der Koordinator 13 weist eine Adresse z.B. 0 auf. Im ersten bis zum vierten Teilnehmer 11, 12, 61, 62 sind keine Teilnehmeradressen gespeichert. In den Figuren 2B bis 2E werden die Teilnehmer 11, 12, 61, 62 von links nach rechts über den Koordinator 13 und mit Hilfe der Daisy-Chain sukzessive adressiert und die geographischen Positionen und damit die Reihenfolge der Teilnehmer 11, 12, 61, 62 festgelegt.

In einer alternativen, nicht gezeigten Ausführungsform ist der Koordinator 13 über die erste Signalleitung 17 und einen oder mehrere weitere Teilnehmer sowie eine oder mehrere weitere Signalleitungen mit dem ersten Teilnehmer 11 gekoppelt.

Figur 2B zeigt die Busanordnung 10 gemäß Figur 2A in der Konfigurationsphase K. Der Koordinator 13 aktiviert über die erste Signalleitung 17 den ersten Teilnehmer 11. Um die Aktivierung anzudeuten, ist die erste Signalleitung 17 gestrichelt gezeichnet. Nach der Aktivierung sendet der Koordinator 13 über die erste und die zweite Busleitung 21, 22 ein Telegramm, das eine erste Teilnehmeradresse enthält, an alle Teilnehmer 11, 12, 61, 62. Ausschließlich der aktivierte Teilnehmer, nämlich der erste Teilnehmer 11, übernimmt die im Telegramm enthaltene erste Teilnehmeradresse in seinen flüchtigen Speicher 54. Die erste Teilnehmeradresse kann 1 sein.

Wie erläutert, setzt der Koordinator 13 seine Daisy-Chain und sendet die zu vergebene Teilnehmeradresse 1 als Broadcast über die RS 485 Busleitung/Datenleitung 21, 22 des Busses 14 an alle Teilnehmer 11, 12, 61, 62. Zu diesem Zeitpunkt ist ausschließlich die Daisy-Chain beim ersten Teilnehmer 11 aktiv, so dass dieser die vom Koordinator 13 erhaltene Teilnehmeradresse mit der Nummer 1 als die seine interpretiert. Ab diesem Zeitpunkt kann der erste Teilnehmer 11 Nachrichten mit der zuvor erhaltenen Teilnehmeradresse empfangen.

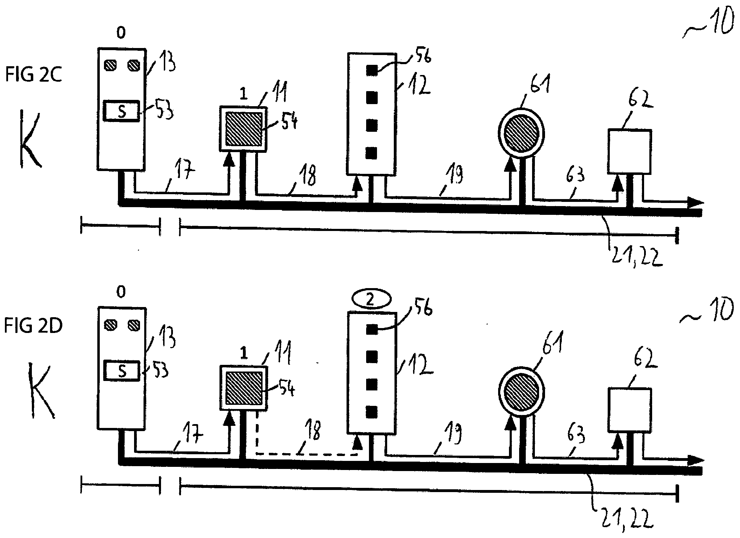

Figur 2C zeigt die bereits in Figuren 2A und 2B gezeigte Busanordnung 10 in einem weiteren Schritt der Konfigurationsphase K. Der Koordinator 13 nimmt eine Verbindung zum ersten Teilnehmer 1 über die erste und die zweite Busleitung 21, 22 auf, um eine erste Seriennummer des ersten Teilnehmers 11 auszulesen. Dazu sendet der Koordinator 13 ein Telegramm an alle Teilnehmer 11, 12, 61, 62, das die erste Teilnehmeradresse sowie den Befehl, die Seriennummer bereitzustellen, umfasst. Der Transceiver 25 des ersten Teilnehmers 11 erkennt, dass der erste Teilnehmer 11 angesprochen ist und bewirkt, dass der Prozessorkern 15 des ersten Teilnehmers 11 über die erste und die zweite Busleitung 21, 22 die erste Seriennummer an den Koordinator 13 sendet, der sie im nicht-flüchtigen Speicher 53 speichert. Dadurch ist der erste Teilnehmer 11 im Koordinator 13 registriert.

In Figur 2C ist der Koordinator 13 in der Lage, eine Verbindung zum ersten Teilnehmer 11 aufzunehmen und seine Daten abzufragen. Unter anderem wird die erste Seriennummer ausgelesen und im Koordinator 13 mit der dazugehörigen ersten Teilnehmeradresse verknüpft und remanent gespeichert. Die Daisy-Chain wird zurückgesetzt.

Figur 2D zeigt die Busanordnung 10, die bereits in den Figuren 2A bis 2C gezeigt ist, in einem weiteren Schritt in der Konfigurationsphase K. Der Koordinator 13 sendet ein Telegramm an den ersten Teilnehmer 11 mit dem Befehl, die ausgangsseitige Signalleitung, also die zweite Signalleitung 18, zu aktivieren. Der erste Teilnehmer 11 erkennt mittels seines Transceivers 25, dass er angesprochen ist und aktiviert über ein Signal auf der zweiten Signalleitung 18 den zweiten Teilnehmer 12. Anschließend sendet der Koordinator 13 ein Telegramm an alle Teilnehmer 11, 12, 61, 62, das die zweite Teilnehmeradresse, z.B. 2, enthält. Da jedoch ausschließlich der zweite Teilnehmer 12 aktiviert ist, übernimmt ausschließlich der zweite Teilnehmer 12 die zweite Teilnehmeradresse in seinen flüchtigen Speicher 56. Als weiteren Schritt in der Konfigurationsphase K veranlasst der Koordinator 13 den zweiten Teilnehmer 12, die zweite Seriennummer bereitzustellen. Der zweite Teilnehmer 12 wird durch die Abspeicherung der zweiten Seriennummer im nicht-flüchtigen Speicher 53 des Koordinators 13 registriert.

In Figur 2D erhält der erste Teilnehmer 11 den Auftrag, seine Daisy-Chain zu setzen, so dass die Adressierung fortgeführt werden kann. Der Koordinator 13 sendet eine Broadcast mit der enthaltenen Teilnehmeradresse 2. Dieses Prozedere führt der Koordinator 13 durch, bis alle Teilnehmer eine Teilnehmeradresse zugewiesen bekommen haben. Folglich wird der dritte Teilnehmer 61 aktiviert und ihm eine dritte Teilnehmeradresse, etwa 3, zugewiesen sowie eine dritte Seriennummer des dritten Teilnehmers 61 abgefragt. Der vierte Teilnehmer 62 führt entsprechende Schritte durch.

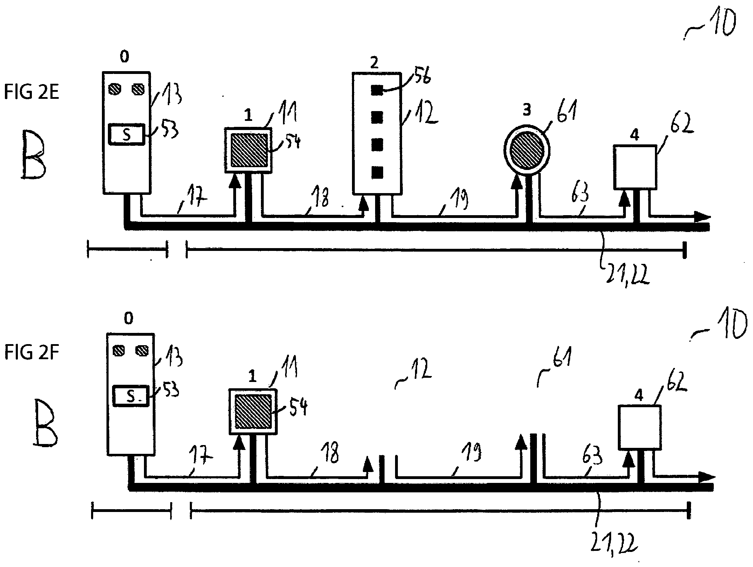

Figur 2E zeigt die Busanordnung 10, die bereits in Figuren 2A bis 2D gezeigt ist, in der Betriebsphase nach Abschluss der Konfigurationsphase K. Der Koordinator 13 ist nunmehr in der Lage, alle Teilnehmer 11, 12, 61, 62 über die Teilnehmeradressen zu adressieren.

Die adressierten Teilnehmer 11, 12, 61, 62 werden inklusive Parameter- und Konfigurationsdaten (Seriennummern, Hersteller-Identität) remanent im Koordinator 13 gespeichert. Über die eindeutige Seriennummer lassen sich zuvor ermittelte Teilnehmer 11, 12, 61, 62, auch nach Ausfällen, durch den Koordinator 13 wieder ansprechen. Die adressierten Teilnehmer 11, 12, 61, 62 speichern sich ihre Teilnehmeradressen nicht remanent ab und verhalten sich nach erneutem Power-up wieder wie zu Beginn, etwa wie in Figur 2A.

Figur 2F zeigt die Busanordnung 10, wie sie bereits in den Figuren 2A bis 2E erläutert ist, in der Betriebsphase B. In der Betriebsphase B können Teilnehmer ausfallen. In dem in Figur 2F gezeigten Beispiel sind der zweite und der dritte Teilnehmer 12, 61 ausgefallen. Der Koordinator 13 ist weiter in der Lage, Telegramme an die nicht ausgefallenen Teilnehmer 11, 62 über die erste und die zweite Busleitung 21, 22 zu senden und die nicht ausgefallenen Teilnehmer 11, 62 zu steuern oder ihre Daten abzufragen. Der Koordinator 13 erkennt den Ausfall der Teilnehmer, in diesem Fall des zweiten und des dritten Teilnehmers 12, 61, und speichert im nicht-flüchtigen Speicher 53 eine Information über den Ausfall der ausgefallenen Teilnehmer 12, 61, das heißt registriert diese als ausgefallen.

Auch nach Ausfall von Teilnehmern 12, 61 läuft die Busanordnung 10 weiter. Der Koordinator 13 übernimmt die Rolle der ausgefallenen Teilnehmer 12, 61. Der flüchtige Speicher 54, 56 des oder der ausgefallenen Teilnehmer 12, 61 verliert während des Ausfalls in der Regel die Teilnehmeradresse.

Der Koordinator 13 ist derart konfiguriert, dass er einen oder mehrere ausgefallene Teilnehmer wieder aktiviert, beispielsweise azyklisch oder zu vorgegebenen Zeitpunkten. Ein ausgefallener Teilnehmer kann beispielsweise in einer Ausschaltphase A repariert werden. In einer Ausführungsform kann der ausgefallene Teilnehmer auch in einer Betriebsphase B entnommen und nach Reparatur wieder eingesetzt werden. Dieses Verfahren wird als Hot-Plug bezeichnet.

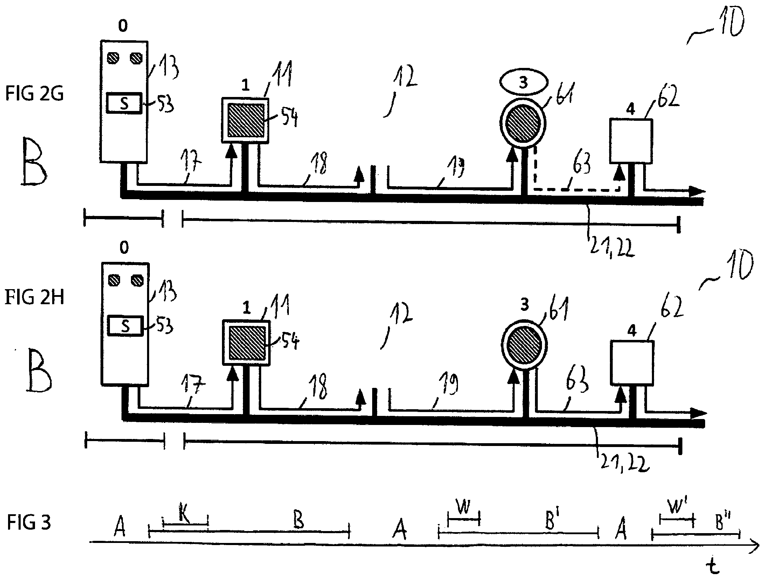

Figur 2G zeigt die beispielhafte Busanordnung 10, wie sie bereits in den Figuren 2A bis 2F gezeigt ist, in einem Teil der Betriebsphase B. Wie in Figur 2F gezeigt, sind zwei Teilnehmer, nämlich der zweite und der dritte Teilnehmer 12, 61, ausgefallen. Ausschließlich der dritte Teilnehmer 61 ist wieder vorhanden und soll wieder angekoppelt werden. Zur Aktivierung sendet der Koordinator 13 ein Telegramm über die erste und die zweite Busleitung 21, 22 mit der Seriennummer des ausgefallenen Teilnehmers, also mit der Seriennummer des dritten Teilnehmers 61. Beispielsweise kann der dritte Teilnehmer 61 den Erhalt des Telegramms gegenüber dem Koordinator 13 bestätigen. Der Koordinator 61 sendet ein Telegramm an den ausgefallenen Teilnehmer 61 mit dem Befehl, dass dieser ein Signal an seiner ausgangsseitigen Signalleitung an den nachfolgenden Teilnehmer 62 abgibt.

Im Beispiel der Figur 2G sendet der dritte Teilnehmer 61 über die vierte Signalleitung 63 ein Signal an den vierten Teilnehmer 62. Der Teilnehmer 62, der sich nach dem ausgefallenen Teilnehmer 61 am Bus 14 befindet, übermittelt dem Koordinator 13 seine Aktivierung. Der Koordinator 13 übermittelt die dritte Teilnehmeradresse an den dritten Teilnehmer 61, etwa mittels eines Telegramms, das an die dritte Seriennummer adressiert ist. Somit ist sichergestellt, dass derjenige Teilnehmer, der die dritte Seriennummer aufweist, nicht an einem irgendeinem Platz am Bus 14 bei seiner Wiederanschaltung befestigt ist, sondern an der korrekten Stelle, nämlich unmittelbar vor dem vierten Teilnehmer 62.

Wie oben beschrieben, lassen sich über die eindeutige Seriennummer wiederkehrende Teilnehmer 61 vom Koordinator 13 auch ohne Daisy-Chain ansprechen. Für die Ermittlung der geographischen Positionen wird dann allerdings die Daisy-Chain des erfassten Teilnehmers 61 zur Hilfe genommen. So kann nach Aktivierung der Daisy-Chain vom dritten Teilnehmer 61 zum vierten Teilnehmer 62 die geographische Lage des dritten Teilnehmers 61 wieder bestätigt werden.

Figur 2H zeigt die Busanordnung 10, die bereits in den Figuren 2A bis 2G gezeigt ist, nach Durchführung der anhand der Figur 2G erläuterten Schritte. Der dritte Teilnehmer 61 hat nun seine Teilnehmeradresse 3 zurückerhalten und kann in die Busanordnung 10 wieder aufgenommen werden. Der Koordinator 13 speichert in seinem nicht-flüchtigen Speicher 53, dass der dritte Teilnehmer 61 aktiv ist.

Figur 3 zeigt eine beispielhafte Ausführungsform des zeitlichen Verlaufs der Phasen. Die verschiedenen Phasen sind über einer Zeit t aufgetragen. Die Konfigurationsphase K wird zu Beginn der Betriebsphase B durchgeführt. Nach Durchführung der Koordinationsphase wird in der Betriebsphase B beispielsweise ein regulärer Betrieb der Busanordnung 10 durchgeführt. Nach der Betriebsphase B erfolgt eine Ausschaltphase A. In der Ausschaltphase A sind der Koordinator 13 und die Teilnehmer 11, 12, 61, 62 nicht mit elektrischer Energie versorgt. Auf die Ausschaltphase A folgt eine weitere Betriebsphase B'. Zu Beginn der weiteren Betriebsphase B' wird eine Wiederanlaufphase W durchgeführt. Nach der Wiederanlaufphase W wird in der weiteren Betriebsphase B' der reguläre Betrieb der Busanordnung 10 realisiert. Auf die weitere Betriebsphase B' können weitere Ausschaltphasen A und weitere Betriebsphasen B" folgen. Der in Figuren 2F bis 2G geschilderte Ausfall von Teilnehmern und die Aktivierung von Teilnehmern kann in jeder der Betriebsphasen B, B', B" erfolgen.

In der Wiederanlaufphase W führt der Koordinator 13 dieselben Schritte durch, um die Teilnehmeradressen den Teilnehmern zuzuordnen wie in der Konfigurationsphase K. Zusätzlich führt der Koordinator 13 einen Vergleich der in der Wiederanlaufphase W abgefragten Seriennummern mit den in seinem nicht-flüchtigen Speicher 53 gespeicherten Seriennummern durch.

Ein Bediener kann auch beispielsweise mittels eines Schalters des Koordinators 13 die Busanordnung 10 zurücksetzen, sodass die Busanordnung 10 wieder mit einer Betriebsphase B, die eine Konfigurationsphase K aufweist, startet.

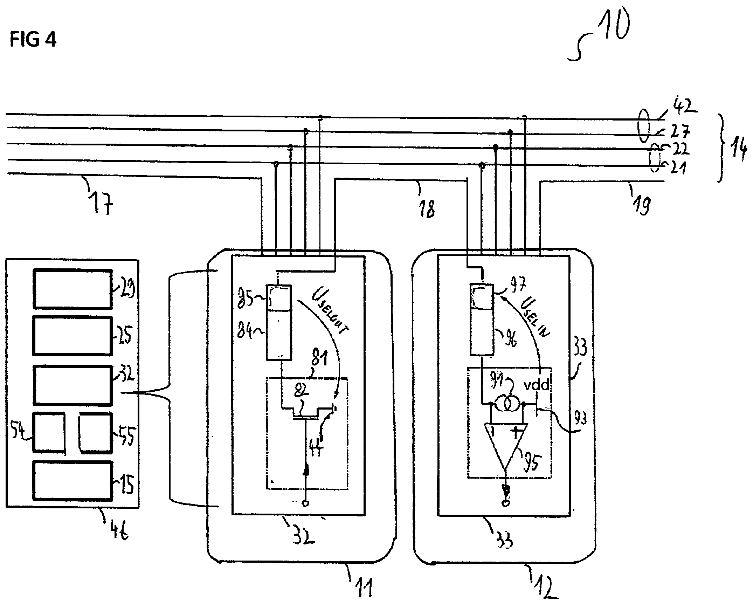

Figur 4 zeigt eine beispielhafte Ausführungsform des ersten und des zweiten Teilnehmers 11, 12, wie sie beispielsweise in der Busanordnung 10 gemäß Figuren 1 und 2A bis 2H realisiert werden kann. Die in Figur 4 gezeigte Ausführungsform kann auch unabhängig von den oben geschilderten Verfahren und Schaltungsdetails realisiert werden. Die Signalleitungsschaltung 32 des ersten Teilnehmers 11 umfasst ausgangsseitig eine schaltbare Stromsenke 81. Die schaltbare Stromsenke 81 ist zwischen der zweiten Signalleitung 18 und dem Bezugspotentialanschluss 44 angeordnet. Der Prozessorkern 15 ist mit einem Steuereingang der schaltbaren Stromsenke 81 verbunden. Die schaltbare Stromsenke 81 kann einen Schalter 82 aufweisen, der einen Stromfluss von der zweiten Signalleitung 18 zum Bezugspotentialanschluss 44 steuert. Die erste Teilnehmer 11 weist einen Pin 85 und eine Schutzschaltung 84 auf, die die zweite Signalleitung 18 mit der schaltbaren Stromsenke 81 koppeln. Die Schutzschaltung 84 kann als Schutzschaltung gegen elektrostatische Entladung implementiert sein.

Die Signalleitungsschaltung 33 des zweiten Teilnehmers 12 umfasst ebenfalls eine nicht-eingezeichnete schaltbare Stromsenke, die zwischen der dritten Signalleitung 19 und einem Bezugspotentialanschluss angeordnet ist und analog zur schaltbaren Stromsenke 81 des ersten Teilnehmers 11 realisiert ist. Auch der in Figur 4 nicht gezeigte Koordinator 13 weist zwischen dem Prozessorkern 20 und der ersten Signalleitung 17 die Signalleitungsschaltung 31 mit einer schaltbaren Stromsenke auf, die analog zur schaltbaren Stromsenke 81 implementiert ist.

Die Signalleitungsschaltung 33 des zweiten Teilnehmers 12 umfasst eingangsseitig eine Stromquelle 91 und einen Komparator 95. Die Stromquelle 91 ist zwischen der zweiten Signalleitung 18 und einem Versorgungsspannungsanschluss 93 der Spannungsversorgung 30 geschaltet. Der Komparator 95 ist ausgangsseitig mit einem Eingang des Prozessorkerns 16 gekoppelt. Die beiden Eingänge des Komparators 95 sind mit den beiden Anschlüssen der Stromquelle 91 verbunden. Der zweite Teilnehmer 12 weist einen Pin 97 und eine Schutzschaltung 96 auf, die die zweite Signalleitung 18 mit der Stromquelle 91 koppeln. Die Schutzschaltung 96 kann als Schutzschaltung gegen elektrostatische Entladung realisiert sein.

Entsprechend weist auch die Signalleitungsschaltung 32 des ersten Teilnehmers 11 eine nicht-eingezeichnete Stromquelle auf, die die erste Signalleitung 17 mit einem Versorgungsspannungsanschluss koppelt und analog zur Stromquelle 91 des zweiten Teilnehmers 12 realisiert ist.

Der erste Teilnehmer 11 aktiviert den zweiten Teilnehmer 12 in Vorwärtsrichtung dadurch, dass der erste Teilnehmer 11 die schaltbare Stromsenke 81 zwischen einem leitenden Zustand und einem nicht-leitenden Zustand umschaltet. Im leitenden Zustand der schaltbaren Stromsenke 81 fließt ein Strom von der Stromquelle 91 des zweiten Teilnehmers 12 über die zweite Steuerleitung 18 zur schaltbaren Stromsenke 81 des ersten Teilnehmers 11. An der schaltbaren Stromsenke 81 ist eine Ausgangsspannung U_{SELOUT} abgreifbar. An der Stromquelle 91 ist eine Eingangsspannung U_{SELIN} abgreifbar. Die Eingangsspannung U_{SELIN} liegt somit zwischen dem Versorgungsspannungsanschluss 93 und dem Pin 97 an. Wird die schaltbare Stromsenke 81 leitend, so sinkt die Ausgangsspannung U_{SELOUT} von einem hohen Spannungswert auf nahezu 0 Volt und steigt die Eingangsspannung U_{SELIN} von einem niedrigen Spannungswert, also etwa einem logischen Wert 1, auf einen hohen Spannungswert, also einen logischen Wert 0, an. Der Spannungswert der Eingangsspannung U_{SELIN} wird vom Komparator 95 detektiert. Der zweite Teilnehmer 12 detektiert die Änderung des durch die zweite Signalleitung 18 fließenden Stroms und somit die Änderung der Eingangsspannung U_{SELIN} mit dem Komparator 95. Wenn die Stromsenke 82 vom ersten Teilnehmer 11 aktiviert wird, fließt wie bereits beschrieben ein Strom von der Stromquelle 91 zur Stromsenke 81. Somit ändert sich die Eingangsspannung U_{SELIN}. Das Resultat ist, dass am Pin 97 des zweiten Teilnehmers 12 statt einer logischen 1 [High] eine logische 0 [Low] gemessen wird, und zwar so lange, bis der erste Teilnehmer 11 seine Stromsenke 81 wieder deaktiviert.

Der Prozessorkern 15 des ersten Teilnehmers 11 kann über seine Verbindung zum Schalter 82 die schaltbare Stromsenke 81 wahlweise leitend und nicht-leitend schalten. Der resultierende Stromfluss durch die zweite Signalleitung 18 wird vom Komparator 95 detektiert und dem Prozessorkern 16 des zweiten Teilnehmers 12 mitgeteilt. Der Komparator 95 detektiert einen Stromfluss oder eine Stromunterbrechung. Damit leitet der erste Teilnehmer 11 in Vorwärtsrichtung ein Signal über die zweite Signalleitung 18 an den zweiten Teilnehmer 12. In entsprechender Weise kann der Koordinator 13 den ersten Teilnehmer 11 und der zweite Teilnehmer 12 den dritten Teilnehmer 61 in Vorwärtsrichtung aktivieren. Die Höhe des Stromflusses wird vor allem von der Stromquelle 91 begrenzt, beispielsweise auf 5 mA. Somit ist ein großer Energieverbrauch vermieden.

### Bezugszeichenliste

- 10: Busanordnung
- 11: erster Teilnehmer
- 12: zweiter Teilnehmer
- 13: Koordinator
- 14: Bus
- 15, 16: Prozessorkern
- 17: erste Signalleitung
- 18: zweite Signalleitung
- 19: dritte Signalleitung
- 20: Prozessorkern
- 21: mindestens eine Busleitung
- 22: weitere Busleitung
- 24, 25, 26: Transceiver
- 27: Versorgungsleitung
- 28: Teilnehmerspannungsversorgung
- 29,30: Spannungsversorgung
- 31, 32, 33: Signalleitungsschaltung
- 34: Mikrocontroller
- 35, 36: Applikationseinrichtung
- 42: Bezugspotentialleitung
- 44: Bezugspotentialanschluss
- 45, 46, 47: integrierte Schaltung
- 50: Oszillator
- 51: weiterer Speicher
- 52: flüchtiger Speicher
- 53: nicht-flüchtiger Speicher
- 54: erster flüchtiger Speicher
- 55: erster nicht-flüchtiger Speicher
- 56: zweiter flüchtiger Speicher
- 57: zweiter nicht-flüchtiger Speicher
- 58: weiterer Transceiver
- 59: weiterer Busanschluss
- 60: Feldbus
- 61: dritter Teilnehmer
- 62: vierter Teilnehmer
- 63: vierte Signalleitung
- 81: schaltbare Stromsenke
- 82: Schalter
- 83: Schutzschaltung
- 84: Pin
- 91: Stromquelle
- 93: Versorgungsspannungsanschluss
- 95: Komparator
- 96: Schutzschaltung
- 97: Pin
- A: Ausschaltphase
- B, B', B": Betriebsphase
- K: Konfigurationsphase
- t: Zeit
- U_{SELIN}: Eingangsspannung
- U_{SELOUT}: Ausgangsspannung
- VDD: Versorgungsspannung
- W, W': Wiederanlaufphase

## Patentansprüche

1. Busanordnung, umfassend
- einen Koordinator (13),
- einen ersten Teilnehmer (11) mit einer ersten Seriennummer,
- einen zweiten Teilnehmer (12) mit einer zweiten Seriennummer und
- einen Bus (14), umfassend eine erste Signalleitung (17), die den ersten Teilnehmer (11) und den Koordinator (13) koppelt, und eine zweite Signalleitung (18), die den zweiten Teilnehmer (12) an den ersten Teilnehmer (11) anschließt,
wobei der Koordinator (13) ausgelegt ist, in einer Konfigurationsphase (K)
- eine Verbindung zum ersten Teilnehmer (11) über den Bus (14) aufzunehmen, die erste Seriennummer abzufragen und im nicht-flüchtigen Speicher (53) zu speichern sowie
- eine Verbindung zum zweiten Teilnehmer (12) über den Bus (14) aufzunehmen, die zweite Seriennummer abzufragen und im nicht-flüchtigen Speicher (53) zu speichern, **dadurch gekennzeichnet,**
**dass** der Koordinator (13) einen nicht-flüchtigen Speicher (53) umfasst,
wobei der Bus (14) mindestens eine Busleitung (21) umfasst, die den Koordinator (13) mit dem ersten und dem zweiten Teilnehmer (11, 12) verbindet, und
wobei der erste Teilnehmer (11) die erste Seriennummer an den Koordinator (13) über die mindestens eine Busleitung (21) sendet und der zweite Teilnehmer (12) die zweite Seriennummer an den Koordinator (13) über die mindestens eine Busleitung (21) sendet.

2. Busanordnung nach Anspruch 1,
wobei der Koordinator (13) ausgelegt ist, die im nicht-flüchtigen Speicher (53) gespeicherte erste Seriennummer mit der im nicht-flüchtigen Speicher (53) gespeicherten zweiten Seriennummer zu vergleichen und ein Signal bereitzustellen, wenn die zwei Seriennummern identisch sind.

3. Busanordnung nach Anspruch 1 oder 2,
wobei der Koordinator (13) ausgelegt ist, in einer Wiederanlaufphase (W), die der Konfigurationsphase (K) folgt, eine Verbindung zum ersten und zum zweiten Teilnehmer (11, 12) aufzunehmen, die erste und die zweite Seriennummer abzufragen und die abgefragte erste und zweite Seriennummer mit der im nicht-flüchtigen Speicher (53) gespeicherten ersten und zweiten Seriennummer zu vergleichen.

4. Busanordnung nach einem der Ansprüche 1 bis 3,
wobei der Koordinator (13) ausgelegt ist, in einen Austauschmodus versetzt zu werden, so dass er in einer Wiederanlaufphase (W), die der Konfigurationsphase (K) folgt, eine Verbindung zum ersten und zum zweiten Teilnehmer (11, 12) aufnimmt, die erste und die zweite Seriennummer abfragt und die abgefragte erste und zweite Seriennummer anstelle der bisher im nicht-flüchtigen Speicher (53) gespeicherten ersten und zweiten Seriennummer im nicht-flüchtigen Speicher (53) speichert.

5. Busanordnung nach einem der Ansprüche 1 bis 4,
wobei der Koordinator (13) ausgelegt ist, in der Konfigurationsphase (K) über die erste Signalleitung (17) den ersten Teilnehmer (11) zu aktivieren und über die mindestens eine Busleitung (21) ein Telegramm, das eine erste Teilnehmeradresse enthält, an den ersten und den zweiten Teilnehmer (11, 12) abzusenden, und
der erste Teilnehmer (11) ausgelegt ist, die erste Teilnehmeradresse in einem ersten flüchtigen Speicher (54) des ersten Teilnehmers (11) zu speichern.

6. Busanordnung nach einem der Ansprüche 1 bis 5,
wobei der erste Teilnehmer (11) ausgelegt ist, in der Konfigurationsphase (K) über die zweite Signalleitung (18) den zweiten Teilnehmer (12) zu aktivieren,
der Koordinator (13) ausgelegt ist, über die mindestens eine Busleitung (21) ein Telegramm, das eine zweite Teilnehmeradresse enthält, an den ersten und den zweiten Teilnehmer (11, 12) abzusenden, und
der zweite Teilnehmer (12) ausgelegt ist, die zweite Teilnehmeradresse in einem zweiten flüchtigen Speicher (56) des zweiten Teilnehmers (12) zu speichern.

7. Busanordnung nach Anspruch 5 oder 6,
wobei der Koordinator (13) ausgelegt ist, über die mindestens eine Busleitung (21) ein Telegramm, das wahlweise die erste Teilnehmeradresse oder die erste Seriennummer sowie Daten enthält, an den ersten und den zweiten Teilnehmer (11, 12) abzusenden, und
ein Transceiver (25) des ersten Teilnehmers (11) ausgelegt ist, die erste Teilnehmeradresse und die erste Seriennummer zu erkennen, so dass der erste Teilnehmer (11) die Daten im Telegramm verarbeitet.

8. Busanordnung nach einem der Ansprüche 1 bis 7,
wobei der Koordinator (13) ausgelegt ist, den Ausfall des ersten und/oder des zweiten Teilnehmers (11, 12) zu erkennen und die Information über den Ausfall des ersten und/oder des zweiten Teilnehmers (11, 12) im nicht-flüchtigen Speicher (53) zu speichern.

9. Busanordnung nach Anspruch 8,
wobei nach der Speicherung der Information über den Ausfall des ersten Teilnehmers (11) der Koordinator (13) ausgelegt ist, über die mindestens eine Busleitung (21) ein Telegramm, das die erste Seriennummer und einen Befehl zum Abgeben eines Signals an die zweite Signalleitung (18) enthält, an den ersten und den zweiten Teilnehmer (11, 12) abzusenden, und
der erste Teilnehmer (11) ausgelegt ist, den zweiten Teilnehmer (12) über die zweite Signalleitung (18) zu aktivieren,
der zweite Teilnehmer (12) ausgelegt ist, die Aktivierung gegenüber dem Koordinator (13) zu bestätigen, und
der Koordinator (13) ausgelegt ist, die Information über die Einsatzfähigkeit des ersten Teilnehmers (11) im nicht-flüchtigen Speicher (53) zu speichern.

10. Busanordnung nach einem der Ansprüche 1 bis 9,
wobei der erste Teilnehmer (11) eine schaltbare Stromsenke (81) umfasst und der zweite Teilnehmer (12) eine Stromquelle (91) und einen Komparator (95) umfasst,
wobei die zweite Signalleitung (18) die schaltbare Stromsenke (81) mit der Stromquelle (91) koppelt.

11. Busanordnung nach Anspruch 10,
wobei zum Aktivieren des zweiten Teilnehmers (12) der erste Teilnehmer (11) ausgelegt ist, die schaltbare Stromsenke (81) zwischen einem leitenden Zustand und einem nicht-leitenden Zustand umzuschalten, und der zweite Teilnehmer (12) ausgelegt ist, die Änderung einer Eingangsspannung (U_{SELIN}) des zweiten Teilnehmers (12) mit dem Komparator (95) zu detektieren.

12. Verfahren zum Betreiben einer Busanordnung, umfassend folgende Schritte in einer Konfigurationsphase (K):
- Aufnehmen einer Verbindung von einem Koordinator (13) zu einem ersten Teilnehmer (11) mit einer ersten Seriennummer über einen Bus (14),
- Senden der ersten Seriennummer vom ersten Teilnehmer (11) an den Koordinator (13) über mindestens eine Busleitung (21) des Busses (14),
- Abspeichern der ersten Seriennummer in einem nicht-flüchtigen Speicher (53) des Koordinators (13),
- Aufnehmen einer Verbindung vom Koordinator (13) zu einem zweiten Teilnehmer (12) mit einer zweiten Seriennummer über den Bus (14),
- Senden der zweiten Seriennummer vom zweiten Teilnehmer (12) an den Koordinator (13) über die mindestens eine Busleitung (21) und
- Abspeichern der zweiten Seriennummer im nicht-flüchtigen Speicher (53) des Koordinators (13),
wobei der Bus (14) zusätzlich eine erste Signalleitung (17), die den ersten Teilnehmer (11) und den Koordinator (13) koppelt, und eine zweite Signalleitung (18), die den zweiten Teilnehmer (12) an den ersten Teilnehmer (11) anschließt, umfasst und die mindestens eine Busleitung (21) den Koordinator (13) mit dem ersten und dem zweiten Teilnehmer (11, 12) verbindet.

## Claims

1. Bus assembly, comprising
- a coordinator (13),
- a first subscriber (11) with a first serial number,
- a second subscriber (12) with a second serial number and
- a bus (14), comprising a first signal line (17), which couples the first subscriber (11) and the coordinator (13), and a second signal line (18) which connects the second subscriber (12) to the first subscriber (11),
wherein the coordinator (13) is designed, in a configuration phase (K),
- to establish a connection to the first subscriber (11) via the bus (14), to query the first serial number and to store the first serial number in the non-volatile memory (53)
and
- to establish a connection to the second subscriber (12) via the bus (14), to query the second serial number and to store the second serial number in the non-volatile memory (53),
**characterised in**
**that** the coordinator (13) comprises a non-volatile memory (53),
wherein the bus (14) comprises at least one bus line (21), which connects the coordinator (13) to the first and the second subscriber (11, 12), and
wherein the first subscriber (11) sends the first serial number to the coordinator (13) via the at least one bus line (21) and the second subscriber (12) sends the second serial number to the coordinator (13) via the at least one bus line (21).

2. Bus assembly according to claim 1,
wherein the coordinator (13) is designed to compare the first serial number stored in the non-volatile memory (53) with the second serial number stored in the non-volatile memory (53) and to provide a signal, if the two serial numbers are identical.

3. Bus assembly according to claim 1 or 2,
wherein the coordinator (13) is designed, in a restart phase (W), which follows the configuration phase (K), to establish a connection to the first and to the second subscriber (11, 12), to query the first and the second serial number and to compare the queried first and second serial number with the first and second serial number stored in the non-volatile memory (53).

4. Bus assembly according to any one of claims 1 to 3,
wherein the coordinator (13) is designed to be moved into an exchange mode, so that in a restart phase (W), which follows the configuration phase (K), it establishes a connection to the first and to the second subscriber (11, 12), queries the first and the second serial number and stores the queried first and second serial number in the non-volatile memory (53) instead of the first and second serial number previously stored in the non-volatile memory (53).

5. Bus assembly according to any one of claims 1 to 4,
wherein the coordinator (13) is designed to activate the first subscriber (11) in the configuration phase (K) via the first signal line (17) and via the at least one bus line (21) to send a telegram, which contains the first subscriber address, to the first and the second subscriber (11, 12) and the first subscriber (11) is designed to store the first subscriber address in a first volatile memory (54) of the first subscriber (11).

6. Bus assembly according to any one of claims 1 to 5,
wherein the first subscriber (11) is designed to activate the second subscriber (12) in the configuration phase (K) via the second signal line (18),
the coordinator (13) is designed via the at least one bus line (21) to send a telegram, which contains a second subscriber address, to the first and to the second subscriber (11, 12), and
the second subscriber (12) is designed to store the second subscriber address in a second volatile memory (56) of the second subscriber (12).

7. Bus assembly according to claim 5 or 6,
wherein the coordinator (13) is designed, to send a telegram, which either contains the first subscriber address or the first serial number and data, to the first and the second subscriber (11, 12) via the at least one bus line (21),
and
a transceiver (25) of the first subscriber (11) is designed to detect the first subscriber address and the first serial number, so that the first subscriber (11) processes the data in the telegram.

8. Bus assembly according to any one of claims 1 to 7,
wherein the coordinator (13) is designed to detect the failure of the first and / or of the second subscriber (11, 12) and to store the information about the failure of the first and / or the second subscriber (11, 12) in the non-volatile memory (53).

9. Bus assembly according to claim 8,
wherein after storing the information about the failure of the first subscriber (11) the coordinator (13) is designed to send a telegram, which contains the first serial number and a command to output a signal to the second signal line (18), to the first and the second subscriber (11, 12) via the at least one bus line (21), and
the first subscriber (11) is designed to activate the second subscriber (12) via the second signal line (18),
the second subscriber (12) is designed to confirm the activation with respect to the coordinator (13), and
the coordinator (13) is designed, to store the information about the operability of the first subscriber (11) in the non-volatile memory (53).

10. Bus assembly according to any one of claims 1 to 9,
wherein the first subscriber (11) comprises a switchable current sink (81) and the second subscriber (12) comprises a current source (91) and a comparator (95),
wherein the second signal line (18) couples the switchable current sink (81) with the current source (91).

11. Bus assembly according to claim 10,
wherein in order to activate the second subscriber (12) the first subscriber (11) is designed to switch the switchable current skink (81) between a conductive state and a non-conductive state, and the second subscriber (12) is designed to detect the change of the input voltage (U_{SELIN}) of the second subscriber (12) with the comparator (95).

12. Method for operating the bus assembly, comprising the following steps in a configuration phase (K):
- establishing a connection of a coordinator (13) to a first subscriber (11) with a first serial number via a bus (14),
- sending the first serial number from the first subscriber (11) to the coordinator (13) via at least one bus line (21) of the bus (14),
- storing the first serial number in a non-volatile memory (53) of the coordinator (13),
- establishing a connection from the coordinator (13) to a second subscriber (12) with a second serial number via the bus (14),
- sending the second serial number from the second subscriber (12) to the coordinator (13) via the at least one bus line (21) and
- storing the second serial number in the non-volatile memory (53) of the coordinator (13),
wherein the bus (14) comprises in addition a first signal line (17), which couples the first subscriber (11) and the coordinator (13), and a second signal line (18) which connects the second subscriber (12) to the first subscriber (11), and the at least one bus line (21) connects the coordinator (13) to the first and the second subscriber (11, 12).

## Revendications

1. Agencement de bus, comprenant
- un coordinateur (13),
- un premier utilisateur (11) avec un premier numéro de série,
- un deuxième utilisateur (12) avec un deuxième numéro de série et
- un bus (14), comprenant une première ligne de signal (17), qui relie le premier utilisateur (11) et le coordinateur (13), et une deuxième ligne de signal (18), qui raccorde le deuxième utilisateur (12) au premier utilisateur (11),
lequel coordinateur (13) est conçu pour, dans une phase de configuration (K),
- établir une liaison vers le premier utilisateur (11) via le bus (14), demander le premier numéro de série et le mémoriser dans la mémoire (53) non volatile ainsi que
- établir une liaison vers le deuxième utilisateur (12) via le bus (14), demander le deuxième numéro de série et le mémoriser dans la mémoire (53) non volatile,
**caractérisé en ce que**
le coordinateur (13) comprend une mémoire (53) non volatile,
dans lequel le bus (14) comprend au moins une ligne de bus (21), qui relie le coordinateur (13) au premier et au deuxième utilisateur (11, 12), et
dans lequel le premier utilisateur (11) envoie le premier numéro de série au coordinateur (13) via l'au moins une ligne de bus (21) et le deuxième utilisateur (12) envoie le deuxième numéro de série au coordinateur (13) via l'au moins une ligne de bus (21).

2. Agencement de bus selon la revendication 1,
dans lequel le coordinateur (13) est conçu pour comparer le premier numéro de série mémorisé dans la mémoire (53) non volatile au deuxième numéro de série mémorisé dans la mémoire (53) non volatile et pour fournir un signal lorsque les deux numéros de série sont identiques.

3. Agencement de bus selon la revendication 1 ou 2,
dans lequel le coordinateur (13) est conçu pour, dans une phase de redémarrage (W) qui fait suite à la phase de configuration (K), établir une liaison vers le premier et le deuxième utilisateur (11, 12), demander le premier et le deuxième numéro de série et comparer le premier et le deuxième numéro de série demandé au premier et au deuxième numéro de série mémorisé dans la mémoire (53) non volatile.

4. Agencement de bus selon l'une quelconque des revendications 1 à 3,
dans lequel le coordinateur (13) est conçu pour être placé dans un mode d'échange de telle sorte que, dans une phase de redémarrage (W) qui fait suite à la phase de configuration (K), il établit une liaison vers le premier et le deuxième utilisateur (11, 12), il demande le premier et le deuxième numéro de série et il mémorise dans la mémoire (53) non volatile le premier et le deuxième numéro de série demandé à la place du premier et du deuxième numéro de série mémorisé jusqu'alors dans la mémoire (53) non volatile.

5. Agencement de bus selon l'une quelconque des revendications 1 à 4,
dans lequel le coordinateur (13) est conçu pour, dans la phase de configuration (K), activer le premier utilisateur (11) via la première ligne de signal (17) et envoyer via l'au moins une ligne de bus (21) au premier et au deuxième utilisateur (11, 12) un télégramme qui contient une première adresse d'utilisateur
et le premier utilisateur (11) est conçu pour mémoriser la première adresse d'utilisateur dans une première mémoire (54) volatile du premier utilisateur (11).

6. Agencement de bus selon l'une quelconque des revendications 1 à 5,
dans lequel le premier utilisateur (11) est conçu pour, dans la phase de configuration (K), activer le deuxième utilisateur (12) via la deuxième ligne de signal (18),
le coordinateur (13) est conçu pour envoyer via l'au moins une ligne de bus (21) au premier et au deuxième utilisateur (11, 12) un télégramme qui contient une deuxième adresse d'utilisateur et
le deuxième utilisateur (12) est conçu pour mémoriser la deuxième adresse d'utilisateur dans une deuxième mémoire (56) volatile du deuxième utilisateur (12).

7. Agencement de bus selon la revendication 5 ou 6,
dans lequel le coordinateur (13) est conçu pour envoyer via l'au moins une ligne de bus (21) au premier et au deuxième utilisateur (11, 12) un télégramme qui contient au choix la première adresse d'utilisateur ou le premier numéro de série ainsi que des données et
un émetteur/récepteur (25) du premier utilisateur (11) est conçu pour reconnaître la première adresse d'utilisateur et le premier numéro de série de telle sorte que le premier utilisateur (11) traite les données dans le télégramme.

8. Agencement de bus selon l'une quelconque des revendications 1 à 7,
dans lequel le coordinateur (13) est conçu pour reconnaître la panne du premier et/ou du deuxième utilisateur (11, 12) et pour mémoriser l'information concernant la panne du premier et/ou du deuxième utilisateur (11, 12) dans la mémoire (53) non volatile.

9. Agencement de bus selon la revendication 8,
dans lequel, après la mémorisation de l'information concernant la panne du premier utilisateur (11), le coordinateur (13) est conçu pour envoyer via l'au moins une ligne de bus (21) au premier et au deuxième utilisateur (11, 12) un télégramme qui contient le premier numéro de série et une instruction pour délivrer un signal à la deuxième ligne de signal (18) et
le premier utilisateur (11) est conçu pour activer le deuxième utilisateur (12) via la deuxième ligne de signal (18),
le deuxième utilisateur (12) est conçu pour confirmer l'activation par rapport au coordinateur (13) et
le coordinateur (13) est conçu pour mémoriser l'information sur la capacité à fonctionner du premier utilisateur (11) dans la mémoire (53) non volatile.

10. Agencement de bus selon l'une quelconque des revendications 1 à 9,
dans lequel le premier utilisateur (11) comprend un puits de courant (81) commutable et le deuxième utilisateur (12) comprend une source de courant (91) et un comparateur (95),
la deuxième ligne de signal (18) relie le puits de courant (81) commutable à la source de courant (91).

11. Agencement de bus selon la revendication 10,
dans lequel, pour activer le deuxième utilisateur (12), le premier utilisateur (11) est conçu pour commuter le puits de courant (81) commutable entre un état conducteur et un état non conducteur et le deuxième utilisateur (12) est conçu pour détecter la variation d'une tension d'entrée (U_{SELIN}) du deuxième utilisateur (12) avec le comparateur (95).

12. Procédé de fonctionnement d'un agencement de bus, comprenant les étapes suivantes dans une phase de configuration (K) :
- établissement d'une liaison d'un coordinateur (13) vers un premier utilisateur (11) avec un premier numéro de série via un bus (14),
- envoi du premier numéro de série du premier utilisateur (11) au coordinateur (13) via l'au moins une ligne de bus (21) du bus (14),
- mémorisation du premier numéro de série dans une mémoire (53) non volatile du coordinateur (13),
- établissement d'une liaison du coordinateur (13) vers un deuxième utilisateur (12) avec un deuxième numéro de série via le bus (14),
- envoi du deuxième numéro de série du deuxième utilisateur (12) au coordinateur (13) via l'au moins une ligne de bus (21) et
- mémorisation du deuxième numéro de série dans la mémoire (53) non volatile du coordinateur (13),
dans lequel le bus (14) comprend en plus une première ligne de signal (17), qui relie le premier utilisateur (11) et le coordinateur (13), et une deuxième ligne de signal (18), qui raccorde le deuxième utilisateur (12) au premier utilisateur (11), et l'au moins une ligne de bus (21) relie le coordinateur (13) au premier et au deuxième utilisateur (11, 12).
